# EUROPÄISCHE PATENTANMELDUNG

(11) **EP 1 341 297 A2**
(43) Veröffentlichungstag der Anmeldung: **03.09.2003**
(21) Anmeldenummer: 03003717.0
(22) Anmeldetag: 19.02.2003
(51) Int. Cl.: H02P 7/74

(54) **Schaltungsanordnung zur Ansteuerung eines elektromotorischen Antriebs, insbesondere Pumpenantriebs, in einem Haushaltsgrossgerät**

(30) Priorität: 21.02.2002 DE 10207232
(71) Anmelder: Diehl AKO Stiftung & Co. KG, 88239 Wangen (DE)
(72) Erfinder: Weinmann, Martin, 88339 Bad Waldsee (DE)
(74) Vertreter: Diehl Patentabteilung

(57) **Zusammenfassung**

Um in einem Haushaltsgroßgerät nicht nur dessen Hauptantrieb (17), sondern auch dessen Hilfsantrieb (24) variabel und insbesondere optimiert betreiben zu können, ohne den dafür erforderlichen Gesamt-Steuerungsaufwand des Gerätes wesentlich vergrößern zu müssen, werden Haupt- und Hilfsantrieb (17, 24) aus dem gleichen, nur einmal vorhandenen Gleichspannungs-Zwischenkreis (19) über Umschaltersätze (12) von Brückenschaltungen (21, 21') gespeist. Dafür kann vorgesehen sein, den Frequenzumrichter (15) mit seiner Brückenschaltung (21) für den Hauptantrieb (17) über einen in dessen ausgangsseitigen Motorleitungen (13) eingeschalteten Umschaltersatz (12) einpolig oder mehrpolig auf den Drehfeldmotor (23,25) des Hilfsantriebs (24) umzuschalten; oder im Frequenzumrichter (15) werden aus dem Gleichspannungs-Zwischenkreis (19) zwei Halb-Brückenschaltungen (21,21') parallel betrieben, die dem Haupt- und dem Hilfsantrieb (17, 24) zugeordnet sind. Solche Schaltungsvarianten ermöglichen mit dem an sich für den Hauptantrieb (17) konzipierten Frequenzumrichter (15) über die Steuerung der Drehzahl oder der Drehrichtung des Hilfsantriebs (24) zusätzliche strömungsabhängige Funktionen, wie etwa das Freispülen einer Waschmaschinenpumpe von eingespülten Wäschefasern.

## Beschreibung

Die Erfindung betrifft eine Schaltungsanordnung gemäß dem Oberbegriff des Anspruches 1.

Um ein von der festen Netzfrequenz und der Netzspannung unabhängig rotierendes Drehfeld für den Betrieb von Synchronmotoren und Asynchronmotoren einstellen zu können, ist der Einsatz einer gattungsgemäßen Schaltungsanordnung in Haushaltsgroßgeräten üblich, insbesondere etwa zum Ansteuern des Antriebsmotors für die Waschtrommel in einer Waschmaschine oder der Umwälzpumpe für den Spülmittelkreislauf in einer Spülmaschine als deren Hauptantrieben. Dabei wird die Feldspule des jeweiligen Motors aus dem Netzgleichrichter mit ihm nachfolgendem Gleichspannungs-Zwischenkreis über eine mehrpolig umschaltbare Frequenzumrichter-Halbbrückenanordnung betrieben. Die Drehfeldsteuerung infolge koordinierter Ansteuerung der Schalter hinsichtlich Folgefrequenz, Dauer und gegenseitiger Phasenlage erfolgt regelmäßig aus einem Mikroprozessor nach einem gemäß der Motorcharakteristik vorgegebenen Programm, dem aktuelle Steuer- und Regelinformationen nach Maßgabe eines aktuell abzuarbeitenden Betriebsprogrammes überlagert sind.

Neben einem solchen Hauptantrieb ist in einem Haushaltsgroßgerät üblicherweise ein leistungsschwächerer Hilfsantrieb für nur vorübergehend benötigte Zusatzfunktionen anzutreffen, wie etwa für das Befüllen oder Entleeren des Arbeitsraumes mit unbeeinflußter Förderleistung, der aus Kostengründen regelmäßig ohne aufwendige Stromrichter-Steuerungen direkt aus dem einphasigen Netz betrieben wird. Somit wird in Kauf genommen, daß die Arbeitsweise des Hilfsantriebs nicht optimiert werden kann.

Der Erfindung liegt die technische Problemstellung zugrunde, ohne unvertretbar hohen technischen Mehraufwand den Einsatz von Hilfsantrieben flexibler gestalten und dadurch betriebstechnisch optimieren oder sogar ganz neue Betriebsfunktionen damit eröffnen zu können.

Diese Aufgabe ist erfindungsgemäß dadurch gelöst, daß gemäß den im Hauptanspruch angegebenen wichtigsten Merkmalen der am Netz für die Speisung des Frequenzumrichters vorgesehene Gleichspannungs-Zwischenkreis nunmehr sowohl den Hauptantrieb wie auch einen Hilfsantrieb versorgt. Dabei kann vorgesehen sein, in wenigstens einer der Motorzuleitungen von der Frequenzumrichter-Brückenschaltung zum Hauptantrieb einen Umschalter anzuordnen, der die Brückenschaltung insoweit vom Hauptantrieb fort und auf den Hilfsantrieb umschaltet. So ist dann anstelle des bisherigen Hauptantriebs fortan der Hilfsantrieb auf den Umrichter geschaltet und deshalb ohne weiteren Zusatzaufwand ähnlich wie zuvor der Hauptantrieb aus derselben Frequenzumrichter-Brückenschaltung ansteuerbar, um etwa dessen Drehzahl zu variieren und unter Umständen auch in der Drehrichtung umzukehren. Es können aber auch Haupt- und Hilfsantrieb parallel betrieben werden - eventuell sogar mit unterschiedlichen Geschwindigkeiten, indem aus dem Zwischenkreis zwei Brückenschaltungen parallel gespeist werden. Bei denen handelt es sich dann um eine Vollbrückenschaltung konventioneller Art für den Motor des Hauptantriebes, auf die aber nun auch noch der Hilfsantrieb einphasig zugreift, und um eine zusätzliche Teilbrückenschaltung für die anderen Phasen des Hilfsantriebes.

Dieser Steuerungsmöglichkeit auch für den Hilfsantrieb eröffnet ganz neue betriebstechnische Möglichkeiten, wie Variation und sogar Richtungsumkehr eines über den Hilfsantrieb hervorgerufenen Förderdruckes, um dadurch etwa Siebe und Filter, aber auch das Pumpenrad selbst, rasch und wirksam von eingespülten Wäscheflusen und ähnlichen Verunreinigungen zu befreien. Außerdem ermöglicht eine über die Pumpe bewirkte Strömungsumkehr mittels Wasserweichen und ähnlicher Druckimpulsschalter in einer Druckleitung hinter der Pumpe eine gezielte Ansteuerung unterschiedlicher Gerätefunktionen ohne Eingriff in die elektrische Ablaufsteuerung des Betriebsprogrammes. Insbesondere in diesem Zusammenhang ist es zweckmäßig, Motor-Speisegrößen des Frequenzumrichters wie Ausgangsspannung, Strom oder elektrische Leistung als Maß für aktuelle hydraulische oder mechanische Größen im System auszuwerten, etwa bezüglich des Förderdrucks einer Pumpe, um den Ablauf der aktuell eingeleiteten Funktion registrieren und eventuell sogar korrigieren zu können.

Um also in einem Haushaltsgroßgerät nicht nur dessen Hauptantrieb, sondern auch dessen Hilfsantrieb jedenfalls variabel und möglichst sogar optimiert betreiben zu können, ohne den dafür erforderlichen Gesamt-Steuerungsaufwand des Gerätes wesentlich vergrößern zu müssen, wird erfindungsgemäß der Gleichspannungs-Zwischenkreis, der für den Hauptantrieb vorhanden ist, auch für den Betrieb des Hilfsantriebes zur Verfügung gestellt. Insbesondere kann ein aus dem Zwischenkreis gespeister Frequenzumrichter über einen Umschaltersatz einpolig oder mehrpolig vom Hauptantrieb weg auf den Drehfeldmotor des Hilfsantriebes umgeschaltet werden. Das ermöglicht mit dem an sich für den Hauptantrieb konzipierten Frequenzumrichter über die Steuerung der Drehzahl oder der Drehrichtung des Hilfsantriebs zusätzliche strömungsabhängige Funktionen im Gerät, wie etwa das Freispülen der Pumpe von eingespülten Wäschefasern oder Funktionsumschaltungen über Wasserweichen und dergleichen Fluiddruckschalter.

Bezüglich weiterer besonderer Betriebsmöglichkeiten, die sich gerade auch durch variablen Förderdruck bzw. umschaltbare Förderrichtung einer elektromotorisch angetriebenen Pumpe eröffnen und deshalb besonders vorteilhaft mit einer umschaltenden Motorsteuerung gemäß vorliegender Erfindung realisierbar sind, wird zur Ergänzung vorliegender Erfindungsoffenbarung voll inhaltlich auf die eigene ältere Anmeldung DE 1 01 54 630.0 "Elektromotorisch betriebene Pumpe für eine Spülmaschine" vom 07. November 2001 Bezug genommen.

Bezüglich zusätzlicher Weiterbildungen und weiterer Vorteile der Erfindung wird sodann außer auf die weiteren Ansprüche auch auf nachstehende Beschreibung von in der Zeichnung skizzierten Schaltungsmöglichkeiten verwiesen. In der Zeichnung zeigt:
- Fig. 1: in den Motorzuleitungen am Ausgang eines Frequenzumrichters eine dreipolige Umschaltung, um vom Betrieb eines Hauptantriebs zum Betrieb eines Hilfsantriebs mit gleichen Steuerungsmöglichkeiten überwechseln zu können,
- Fig. 2: eine zweipolige Umschaltung zur Inbetriebnahme eines einpoligen Hilfsantriebs,
- Fig. 3: eine einpolige Umschaltung zur Inbetriebnahme eines einpoligen, mit der speisenden Netzfrequenz drehfeld-synchronen Hilfsantriebs,
- Fig. 4: einen Parallelbetrieb von dreiphasigem Hauptantrieb und dreiphasigem oder einphasigem Hilfsantrieb mit getrennten Brückenschaltungen hinter einem gemeinsamen Gleichspannungs-Zwischenkreis und
- Fig. 5: in Abwandlung der zusätzlichen Brückenschaltung nach Fig. 4 eine Möglichkeit zum parallelen Betrieb eines dreiphasigen Hauptantriebs und eines ein- oder dreiphasigen Hilfsantriebs mit unterschiedlichen Drehfeldfrequenzen, unter Einsatz einer Teilbrückenschaltung für einen einphasig an die Brückenschaltung zum Hauptantrieb angeschlossenen Hilfsantrieb.

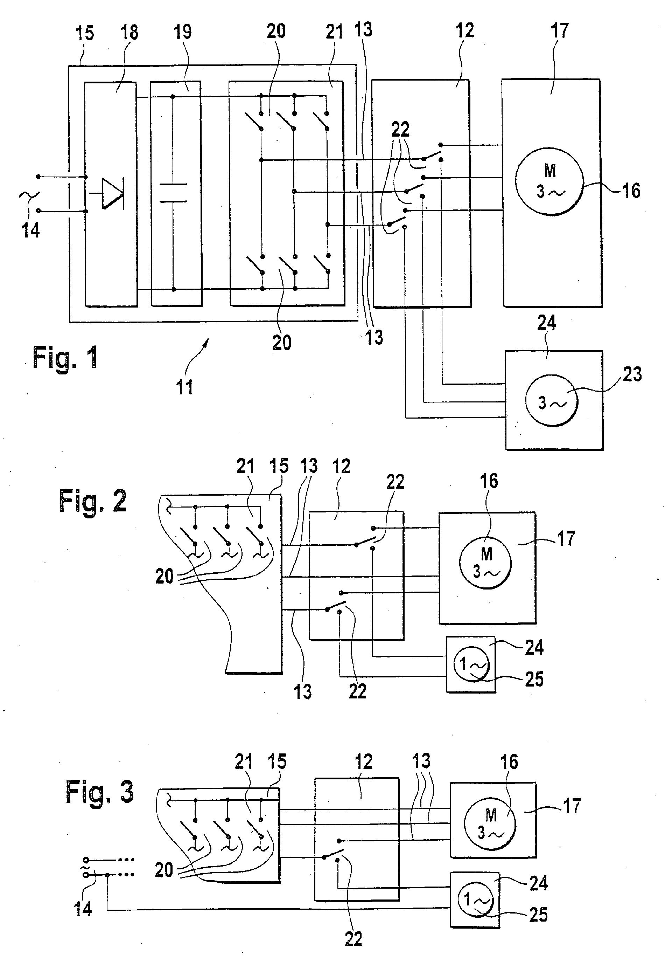

Die in Fig. 1 der Zeichnung skizzierte Schaltungsanordnung 11 besteht im wesentlichen aus einem Umschaltersatz 12 in den drei Motorzuleitungen 13 von einem aus dem Haushaltsnetz 14 gespeisten Frequenzumrichter 15 zu einem Asynchronmotor 16 oder dergleichen Drehfeldmotor als dreiphasigem Hauptantrieb 17 in einem nicht näher dargestellten Haushaltsgroßgerät, etwa zum Antrieb der Trommel einer Waschmaschine oder der Laugenumwälzpumpe einer Spülmaschine. Im Frequenzumrichter 15 wird aus einem Vollwellen-Netzgleichrichter 18 in Graetz-Schaltung ein im wesentlichen aus Kondensatoren großer Kapazität bestehender Gleichspannungs-Zwischenkreis 19 aufgeladen. Dessen Ausgangsspannung wird über wechselweise eingeschaltete Paare von Schaltstrecken 20 einer aus drei parallelen Halbbrücken bestehenden Brückenschaltung 21 mit wechselnden Polaritäten und variablen Dauern auf die drei Motorzuleitungen 13 zum Hauptantrieb 17 geschaltet. Die Steuerung der Schaltvorgänge im Frequenzumrichter 15 über einen programmierten Prozessor ist zur Erleichterung der Übersicht in der Zeichnung fortgelassen, zumal diese Maßnahme insoweit zum Stande der Technik gehört und durch die vorliegende Erfindung nicht betroffen ist.

Im Falle der Fig. 1 wird der Ausgang der Wechselrichter-Brückenschaltung 21 im Frequenzumrichter 15 über den erfindungsgemäß in den Motorzuleitungen 13 angeordneten Umschaltersatz 12 mit in diesem Beispielsfalle drei Wechselschaltern 22 vom dreiphasigen Motor 16 des Hauptantriebs 17 fort auf einen in diesem Falle ebenfalls dreiphasigen Asynchron- oder Synchron-Drehfeldmotor 23 eines Hilfsantriebs 24 geschaltet. Durch diesen Umschaltvorgang wird der Hauptantrieb 17 außer Betrieb und der Hilfsantrieb 24 in Betrieb gesetzt, um beispielsweise vom Antrieb einer Waschtrommel auf den Antrieb einer Entleerungspumpe überzuwechseln. Die Motorsteuerung des Hilfsantriebs 24 erfolgt, insoweit ohne zusätzliche Schaltungsmaßnahmen zu erfordern, wie diejenige des Hauptantriebs 17 aus demselben Frequenzumrichter 15, nun unter dem Einfluß eines für den Betrieb des Hilfsantriebs 24 ausgelegten Steuerprogrammes für die zeitliche Abfolge der Betätigung der Schaltstrecken 20. Dabei kann vorteilhafterweise, wie während der Ansteuerung des Hauptantriebs 17, nun bezüglich des Hilfsantriebs 24 aus dessen auf den Motorzuleitungen 13 aktuell gemessenen Speisegrößen (Spannungen und Strömen, bzw. deren Produkt als elektrischer Leistungsaufnahme, im Prinzipschaltbild nicht gesondert dargestellt) auf aktuelle mechanische oder hydraulische Beanspruchungen im Fluidsystem hinter dem Antrieb 24 rückgeschlossen und demzufolge auch der Betrieb des Hilfsantriebs 24 sowohl hinsichtlich seiner Leistungsaufnahme wie auch hinsichtlich seiner Wirkung beeinflußt und insbesondere optimiert werden.

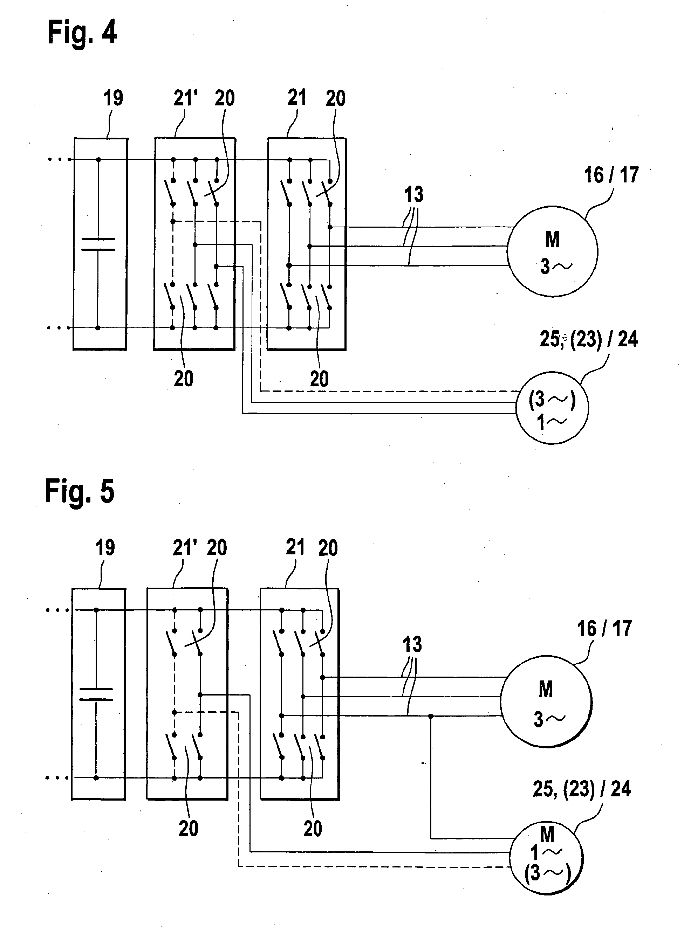

Im Ausführungsbeispiel der schaltungstechnischen Abwandlung gemäß Fig. 2 besteht der Umschaltersatz 12 in den Motorzuleitungen 13 aus nur zwei Wechselschaltern 22 zum Umschalten vom Hauptantrieb 17 auf einen Hilfsantrieb 24 mit hier einphasigem Synchron- oder dergleichen Drehfeldmotor 25, bei dem es sich auch um einen Kondensator-Asynchronmotor handeln kann. Auch dieser Hilfsantrieb 24 kann, wie zuvor der Hauptantrieb 17, über die hinter dem Zwischenkreis 19 einzig vorhandene Stromrichter-Brückenschaltung 21 mit einem frequenzvariablen Drehfeld gespeist werden, etwa um ihn sanft anfahren zu lassen und dann die Arbeitsdrehzahl zu variieren.

In der Abwandlung gemäß Fig. 3 weist der Umschaltersatz 12 gegenüber Fig. 2 nur noch einen Wechselschalter 22 auf, weil nun nur noch eine der beiden Motorzuleitungen 13 vom Hauptantrieb 17 auf den Hilfsantrieb 24 umzuschalten ist, während dessen zweite Zuleitung fest an einen Pol der einphasigen Netzspeisespannung 14 angeschlossen ist. Die primär für die Steuerung des Hauptantriebs 17 konzipierte Wechselrichter-Brückenschaltung 21 dient so wiederum auch der Ansteuerung eines einphasigen Motors 25; wobei diese minimierte Topologie mit ihrem reduzierten Umschaltersatz 12 sich immerhin noch zur Spannungs- und Drehrichtungssteuerung des Synchronmotors 25 im Hilfsantrieb 24 eignet, wenn der im eingeschwungenen Zustand mit der Frequenz des Haushaltsnetzes 14 betrieben wird. Auch ist die begrenzte Drehzahlsteuerung eines Kondensator-Asynchronmotors im Hilfsantrieb 24 so realisierbar.

In der Konfiguration nach Fig. 4 dagegen wird auf ein Umschalten zwischen Haupt- und Hilfsantrieb 16 - 24 verzichtet, um beide gleichzeitig betreiben zu können. Dafür speist hier der Gleichspannungs-Zwischenkreis 19 im Frequenzumrichter 15 parallel zur Brückenschaltung 21 für den Hauptantrieb 18 eine Teilbrückenschaltung 21' für einen wahlweise ein- oder dreiphasigen Motor 25 bzw. 23 im Hilfsantrieb 24. Durch die gestrichelte Ergänzung ist zum Ausdruck gebracht, daß für den Fall eines dreiphasigen (statt einphasigen) Motors 23 des Hilfsantriebs 24 in der Brückenschaltung 21' nach dem Zwischenkreis 19 dann drei Halbbrücken den drei Phasen (statt zwei Halbbrücken den beiden Motorzuleitungen 13 eines Einphasenmotors 25) zugeordnet sind.

Eine Topologie nach Fig. 5 schließlich erlaubt einen Parallelbetrieb von Hauptund Hilfsantriebs-Motoren 16/25 bzw. 16/23 sogar mit unterschiedlichen Frequenzen, also mit unterschiedlich schnell rotierenden Drehfeldern. Bedingung ist nur, daß die Summe des Spannungsbedarfes der beiden Motoren 16+23/25 die Gleichspannung am Ausgang des Zwischenkreises 19 nicht übersteigt. Weil z.B. der Trommel-Hauptantrieb 17 einer Waschmaschine über relativ lange Zeitspannen hinweg für eine niedrige Waschdrehzahl mit niedriger Motorspannung gespeist wird, steht währenddessen genügend Spannungsreserve für gleichzeitigen Betrieb eines Hilfsantriebs 24 zur Verfügung. Dessen z.B. einphasiger Motor 25 ist mit einer seiner beiden Zuleitungen 13 auf eine der Halbbrücken der dreiphasigen Brückenschaltung 21 für den Hauptantriebs-Motor 16 geschaltet, und mit seiner zweiten Zuleitung 13 auf die einzig benötigte Halbbrücke der Teilbrückenschaltung 21' zum Hilfsantriebs-Motor 25. Wieder ist in der Zeichnung gestrichelt berücksichtigt, daß als Hilfsantriebs-Motor 23 auch ein dreiphasiger anwendbar ist, wofür dann in der Teilbrückenschaltung 21' eine weitere Halbbrücke für die dritte Motorzuleitung 13 zur Verfügung steht.

## Patentansprüche

1. Schaltungsanordnung (11) zum Ansteuern eines aus einem Frequenzumrichter (15) mit gesteuerter Brückenschaltung (21) betriebenen elektromotorischen Hauptantriebs (17) in einem Haushalts-Großgerät, das auch mit einem Hilfsantrieb (24) ausgestattet ist,
**dadurch gekennzeichnet,**
**daß** der Hilfsantrieb (24) aus demselben Gleichspannungs-Zwischenkreis (19) wie der Hauptantrieb (17) gespeist ist.

2. Schaltungsanordnung nach Anspruch 1,
**dadurch gekennzeichnet,**
**daß** die Brückenschaltung (21) über einen Umschaltersatz (12) vom Hauptantrieb (17) auf den Hilfsantrieb (24) umschaltbar ist, woraufhin der Hilfsantrieb (24) aus dem an sich für den Hauptantrieb (17) konzipierten Frequenzumrichter (15) ansteuerbar ist.

3. Schaltungsanordnung nach Anspruch 2,
**dadurch gekennzeichnet,**
**daß** der Umschaltersatz (12) in jeder der drei Motorzuleitungen (13) einen Wechselschalter (22) zum Umschalten auf einen dreiphasigen Drehfeld-Motor (23) im Hilfsantrieb (24) aufweist.

4. Schaltungsanordnung nach Anspruch 2,
**dadurch gekennzeichnet,**
**daß** der Umschaltersatz (12) zwei Wechselschalter (22) zum Umschalten von Betrieb des Hauptantriebs (17) auf einen Hilfsantrieb (24) mit einphasigem Drehfeldmotor (25) aufweist.

5. Schaltungsanordnung nach Anspruch 2,
**dadurch gekennzeichnet,**
**daß** der Umschaltersatz (12) einen Wechselschalter (22) in einer der drei Motorzuleitungen (13) zum Umschalten des Betriebs vom Hauptantrieb (17) auf einen Hilfsantrieb (24) mit einphasigem Motor (25) aufweist, dessen zweite Motorleitung fest an einen Pol des speisenden Netzes (14) vor dem Frequenzumrichter (15) geschaltet ist.

6. Schaltungsanordnung nach Anspruch 1,
**dadurch gekennzeichnet,**
**daß** aus dem Gleichspannungs-Zwischenkreis (19) zwei Brückenschaltungen (21,21') parallel gespeist sind, die dem Hauptantrieb (17) bzw. dem Hilfsantrieb (24) zugeordnet sind.

7. Schaltungsanordnung nach Anspruch 6,
**dadurch gekennzeichnet,**
**daß** der Hilfsantrieb (24) mit seinem einphasigen oder dreiphasigen Motor (25 bzw. 23) an eine Teilbrückenschaltung (21') mit zwei bzw. drei Halbbrücken angeschlossen ist.

8. Schaltungsanordnung nach Anspruch 6,
**dadurch gekennzeichnet,**
**daß** für einen Parallelbetrieb von Haupt- und Hilfsantrieb (17, 24) mit auch unterschiedlichen Drehfeldfrequenzen der Hilfsantrieb (24) mit einem ein- bzw. mit einem dreiphasigen Motor (25 bzw. 23) einphasig an eine Halbbrücke der Brückenschaltung (21) für den Hauptantrieb (17) und mit der anderen Phase bzw. mit den anderen beiden Phasen an die einzige Halbbrücke bzw. an die beiden Halbbrücken einer weiteren, für den Hilfsantrieb (24) parallel dazu betriebenen Brückenschaltung (21') angeschlossen ist; wobei die Motore (16, 23/25) für Haupt- und Hilfsantrieb (17, 24) derart ausgelegt sind, daß die Summe ihrer beiden Motorspannungen die Zwischenkreisspannung am Ausgang des Gleichspannungs-Zwischenkreises (19) nicht übersteigt.
